Europäisches Patentamt

European Patent Office

Office européen des brevets

(19)

(11) Publication number: **0 129 440**
**B1**

(12)

# EUROPEAN PATENT SPECIFICATION

(45) Date of publication of patent specification: **07.10.87**

(51) Int. Cl.⁴: **F 16 B 35/00**

(21) Application number: **84304122.9**

(22) Date of filing: **19.06.84**

(54) **Improvements in hydraulic nuts and bolts.**

(30) Priority: **20.06.83 GB 8316753**

(43) Date of publication of application:
**27.12.84 Bulletin 84/52**

(45) Publication of the grant of the patent:
**07.10.87 Bulletin 87/41**

(84) Designated Contracting States:
**DE FR GB IT SE**

(56) References cited:
**FR-A-2 188 722**
**GB-A- 991 783**
**GB-A-1 572 152**
**US-A-4 326 826**

(73) Proprietor: **PILGRIM MOORSIDE LIMITED**
**20 St. Mary's Parsonage**
**Manchester M3 2NL England (GB)**

(72) Inventor: **Annis, Michael Mentor**
**35 Hathersage Drive**
**Glossop Derbyshire SK13 8RG (GB)**
Inventor: **Percival-Smith, Harry David**
**25 Portland Cresent**
**Manchester M13 0BU (GB)**

(74) Representative: **Knowles, Audrey Elizabeth**
**624 Pershore Road**
**Selly Park Birmingham B29 7HG (GB)**

EP 0 129 440 B1

Courier Press, Leamington Spa, England.

## Description

The present invention relates to hydraulically operated nuts and jacks for tensioning bolts and studs, and to bolts, for use at temperatures as high as 500°C or more.

GB—A—991,783 discloses arrangements for the tensioning of bolts or studs by the use of hydraulic pressure. A nut, jack or bolt head is machined to accept an internal jacking or tensioning arrangement, actuated by hydraulic pressure.

Such devices have been used for many years for example on marine propellors and also in the industrial field. A typical embodiment consists of a threaded nut having an annular channel on its underside in which an annular nitrile rubber type and an annular flange load ring or piston are located.

In use, the threaded nut assembly is screwed on to a bolt so that the underside of the flanged load ring abuts the assembly to be bolted together. Hydraulic fluid is then admitted into the tyre via a passage through the nut body whereby the tyre applies thrust to the load ring which transmits a jacking force to the assembly to be bolted.

The reaction of the load ring on the assembly causes an increase in axial length of the bolt and compression of the assembly so that the nut is urged away from the assembly and the bolt tensioned. Shims, that is semi-annular distance pieces, are then inserted into the space between the underside face of the nut body and the load ring flange so that the tension in the bolt is maintained after the hydraulic pressure is relieved from the tyre.

The same result may be achieved by having an annular recess in the underside of a bolt head integral with the bolt to be tensioned, the piston assembly and rubber tyre operating under the influence of hydraulic fluid as described above.

It would be extremely desirable to use such devices to pretension bolts in such applications as land based gas turbines, steam turbines and in nuclear reactors. Such bolts however must operate at elevated temperatures of 500°C or more. Unfortunately the use of a nitrile rubber tyre limits the device to use in operating temperatures of less than 150°C, since above such temperature deterioration of the tyre rapidly takes place.

The present invention is based on the discovery of a sealing system for hydraulic nuts and bolts which does not depend on the use of plastics material, such as natural or synthetic rubbers, and which enables the nut to be used at temperatures of 500°C or more.

According to the present invention there is provided an arrangement for tensioning a bolt or stud in an assembly to be clamped comprising a nut for screwed engagement with the bolt or stud, or the head of the bolt, having in it's underside an annular recess with parallel axially extending side walls, an annular piston member which is a sliding fit in the annular recess, sealing means located in the annular recess between the bottom thereof and the piston member, a passage through the nut or bolt head for admitting pressure liquid from the exterior into the interior of the sealing means whereby, in use, the introduction of the pressure liquid moves the piston away from the bottom of the recess and the nut or bolt head away from the assembly to tension the bolt or stud, characterised in that said sealing means is a metal capsule into which, in use, hydraulic fluid is admitted to form a seal between the piston and the annular recess, and further hydraulic fluid is admitted into the bottom of the recess to act on the metal capsule to develop a load to move the piston.

The metal capsule may be separate or may be integral with the piston, for example by being machined from the same block of metal.

The metal capsule may have a variety of forms. In one form the capsule comprises a simple metal tyre. In use, hydraulic fluid is admitted to the interior of the tyre and the elastic properties of the metal are such that the tyre expands creating a seal between the tyre and the axially directed side walls of the annular recess in the nut. Hydraulic fluid at a greater pressure is then admitted to the space between the bottom of the recess and the tyre to act on the tyre to develop a load to move the piston. In an alternative form the capsule comprises a metal tyre having convoluted walls.

In another form the capsule comprises a simple metal tyre in the form of a U-ring open to the bottom of the recess. On assembly, the U-ring is deformed elastically on its inside and outside diameters to fit into the annular recess providing a seal at low pressures. In use, hydraulic fluid is admitted to the space between the bottom of the recess and the tyre and enters the interior of the tyre which is further deformed to provide a seal at high pressure. On achieving the high pressure seal, the hydraulic pressure acts on the tyre to develop a load to move the piston.

The metal capsule must of course be of a suitable thickness to provide both adequate strength to act upon the piston and sufficient elasticity to deform under pressure to provide a high pressure seal. The capsule is preferably made of a corrosion resistant alloy such as INCONEL alloy 625, INCONEL alloy 718 or stainless steel. In some circumstances carbon or a low alloy may be used. These embodiments are typically made by metal spinning, normally being made in two parts split in the vertical plane.

Any suitable hydraulic fluid may be used providing that it does not give rise to problems when used at high temperatures. Suitable hydraulic fluids may include water based mixtures, these being particularly suitable as they evaporate when the nut or bolt head is at service temperature without causing a fire hazard.

In operation, admission of hydraulic fluid into the nut, or bolt head, of the invention causes the piston to move away from the bottom of the recess, and the nut or bolt head away from an assembly to be bolted, and tensions the bolt or stud. This tension may be maintained by the insertion of shims between the nut and assembly to be bolted, or by use of a lock ring in screwed engagement with the outside of the nut body, the lock ring being screwed down into contact with the assembly to be bolted. Alternatively the lock ring may be in screwed engagement with the annular piston member and is screwed back in contact with the underside of the bolt head. In any case when the hydraulic pressure in the nut or bolt head is released the shim or lock ring maintains the tension in the bolt.

Two exemplary embodiments of the present invention will now be described having reference to the accompanying drawings, in which:

Figure 1 is a view in sectional elevation of a first embodiment according to the present invention; and

Figure 2 is a view in sectional elevation of a second embodiment according to the present invention.

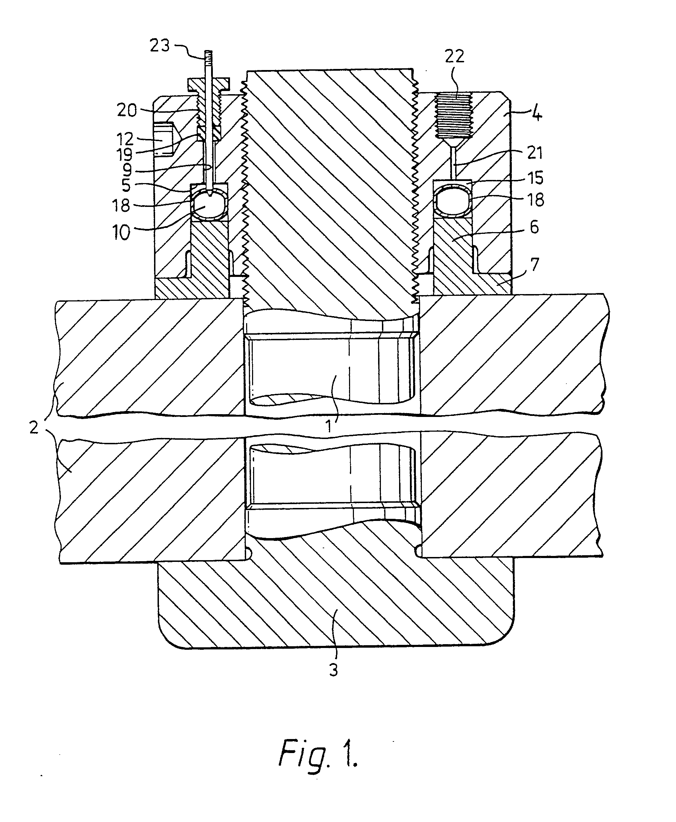

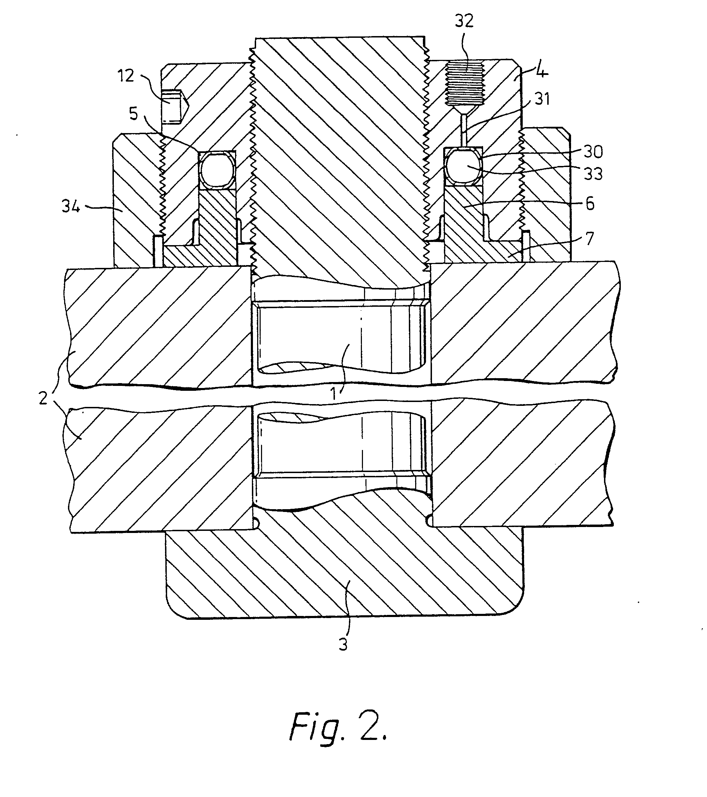

Referring to Figures 1 and 2, a bolt 1 is shown extending through a hole in an assembly represented diagrammatically as 2 and intended to be clamped between the head 3 of the bolt 1 and a nut 4 shown in screwed engagement with the threaded end of the bolt 1.

The body of the nut 4 is provided at its underside with a parallel sided annular recess 5 the side walls of which are parallel and concentric with the axis of the nut 4.

An annular piston 6 is located as a sliding fit in the recess 5, and is provided at its underside face with a flange 7, adapted to abut the surface of assembly 2 to be clamped, extending perpendicularly to the axis of the nut 4.

In the embodiment of Figure 1, a capsule comprising an annular metal tyre 18 is located in the space between the bottom of the recess 5 and the uppermost face of the piston 6. The nut 4 is provided with an axially directed bore 9 the inner end of which terminates in the recess 5 of the nut body 4.

A stem 23 extends through the bore 9 into the interior 10 of the metal tyre 18. The outer end of the stem 23 is screw threaded for the reception of a union (not shown) for connection to a source of pressure liquid. A seal 19 is fitted between the nut 4 and the stem 23 and held in place by the gland nut 22, allowing the stem 23 to move through the seal during operation of the nut.

A further bore 21 communicates with the space 15 between the pressurised tyre 18 and the bottom of the recess 5. The outer end 22 of the bore 21 is adapted for the reception of a union (not shown) for connection to the source of pressure liquid.

In use, the nut 4 is nipped up by hand or with the use of small tommy bar applied in a radial recess such as is shown at 12 so that the flange 7 of the piston 6 abuts the upper side of the assembly 2 to be clamped and the head 3 of the bolt 1 engages the underside of the assembly 2.

Pressure liquid is introduced into the interior 10 of the tyre 18 so as to expand the tyre 18 creating a seal between the tyre 18 and the axially directed side walls of the recess 5.

Further hydraulic fluid at a higher pressure than that inside the metal tyre 18 is admitted to the space 15 between the bottom of the recess 5 and the metal tyre 18. This fluid pressure acts upon the tyre 18 which in turn pushes the piston 6 away from the bottom of the recess 5. This elasticity of the tyre 18 and the fluid pressure inside the metal tyre 18 enables the tyre to maintain the seal between the piston 6 and the walls of the recess 5.

The reaction of the flange 7 against the assembly 2 urges the nut 4 away from the assembly 2 and tensions the bolt 1. Shims (not shown) are inserted into the space between the nut 4 and the flange 7 and, when the hydraulic pressure is relieved, the shim is gripped between the nut 4 and the flange 7 and maintains the tension of the bolt 1.

In the embodiment of Figure 2, a metal capsule comprising a metal tyre 30 in the form of a U-ring is located between the uppermost face of the piston 6 and the bottom of the recess 5.

The tyre 30 is located as a tight fit in recess 5 with its interior 33 open to the bottom of the recess 5 and its outside and inside diameters deformed so that a low pressure seal is created between the tyre 30 and the walls of the recess 5.

A bore 31 communicates with the space within the recess 5. The outer end 32 of the bore 31 is adapted for the reception of a union (not shown) for connection to a source of pressure liquid.

A lock ring 34 is screw threaded on the outside of the nut body, the lowest end of the lock ring 34 abutting the top surface of assembly 2 to be clamped.

In use, hydraulic fluid admitted through the bore 31 into the recess 5 enters the interior 33 of the tyre 30 deforming the outside and inside diameters of the tyre 30 to provide a high pressure seal. On achieving such high pressure seal, the hydraulic pressure acts on the tyre 30 which in turn pushes the piston 6 away from the bottom of the recess 5.

.The reaction of the flange 7 of the piston 6 against the assembly 2 to be clamped urges the nut 4 away from the assembly thereby tensioning the bolt 1. The movement of nut 4 away from the assembly 2 leaves a space between lock ring 34 and the surface of the assembly. The lock ring 34 is nipped down until it abuts the assembly and thus when the hydraulic pressure is relieved the lock nut 34 maintains the tension on the bolt 1.

Both the embodiments above-described may be used at temperatures of 500°C or more. Typically, for nuclear reactor applications the nut is about 12 cm in diameter and the annular recess has a width of some 1 to 1.5 cm. Operating pressures are typically in the range 250 to 350 $MN/m^2$.

The metal capsules 18 and 30 shown in the embodiments are typically made by metal spinning and are normally made in two parts split in the vertical plane. The diameter must be machined to very close tolerances and the parts are then welded together, for example by laser welding. The stem connection needed for capsule 18 would then be fitted by drilling through the wall of the capsule and welding, e.g. by laser welding it into position.

Although not shown in any of these embodiments, it may be desirable to utilise a bolt having an axial bore therethrough. This can be used to provide an indication of the degree of tensioning achieved. This can be carried out either with the aid of a separate sensing device by using a rod of the same initial length as the bolt fixed into the bore at only one end of the bore in the bolt. This rod is not stretched in use and can be compared with the dimensions of the stretched bolt to give a measure of the bolt tensioning.

## Claims

1. An arrangement for tensioning a bolt (1) or stud in an assembly (2) to be clamped comprising a nut (4) for screwed engagement with the bolt or stud, or the head of the bolt, having in it's underside an annular recess (5) with parallel axially extending side walls, an annular piston member (6) which is a sliding fit in the annular recess (5), sealing means located in the annular recess between the bottom thereof and the piston member (6), a passage (9) through the nut (4) or bolt head for admitting pressure liquid from the exterior into the interior of the sealing means whereby, in use, the introduction of the pressure liquid moves the piston (6) away from the bottom of the recess (5) and the nut (4) or bolt head away from the assembly (2) to tension the bolt (1) or stud, characterised in that said sealing means is a metal capsule (18, 30) into which, in use, hydraulic fluid is admitted to form a seal between the piston (6) and the annular recess (5), and further hydraulic fluid is admitted into the bottom of the recess (5) to act on the metal capsule (18, 30) to develop a load to move the piston (6).

2. An arrangement as claimed in claim 1 further characterised in that the metal capsule (18, 30) is a metal tyre (18, 30) into which hydraulic fluid is admitted through a passageway (23, 31).

3. An arrangement as claimed in claim 2 further characterised in that said further hydraulic fluid is admitted into the bottom of the recess (5) through a secondary passageway (21) through the nut (4) or bolt head.

4. An arrangement as claimed in claim 3 further characterised in that the pressure of said further hydraulic fluid admitted into the bottom of the recess is at a greater pressure than the hydraulic pressure in the metal tyre.

5. An arrangement according to claim 2 further characterised in that the metal capsule is a metal tyre having convoluted walls which engage with the wall of the recess (5) at more than one place.

6. An arrangement according to claim 2 further characterised in that the metal tyre (30) is in the form of a U-ring which is located in the recess (5) with the open side facing both the bottom of the recess (5) and the passageway (31).

7. An arrangement according to any one of the preceding claims further characterised in that the metal capsule (18, 30) is manufactured by metal spinning.

8. An arrangement according to any one of the preceding claims further characterised in that shims comprising semi-annular distance pieces are used in order to maintain the tension in the bolt after the hydraulic pressure is relieved from the recess (5).

9. An arrangement according to any one claims 1 to 7 further characterised in that a lock ring (34) is located in screwed engagement on the outside of the nut (4) or of the bolt head or on the piston.

10. An arrangement as claimed in any one of the preceding claims further characterised in that the metal capsule is of a stainless steel alloy, INCONEL alloy 625 or INCONEL alloy 718.

## Patentansprüche

1. Vorrichtung zum Spannen von Bolzen (1) oder Schraubbolzen in einer zusammenzuklammernden Anordnung (2) mit einer Mutter (4) für den gewindemäßigen Eingriff mit dem Bolzen oder Schraubbolzen oder dem Kopf des Bolzens, wobei die Mutter in ihrer Unterseite eine ringförmige Ausnehmung (5) mit axial parallel verlaufenden Seitenwandungen aufweist, ein ringförmiger Kolbenteil (6) in Gleitpassung in der ringförmigen Ausnehmung (5) angeordnet sind, Dichteinrichtungen in der ringförmigen Ausnehmung zwischen deren Boden und dem Kolbenteil (6) angeordnet sind, wobei ferner ein Durchlaß (9) in der Mutter (4) oder dem Bolzenkopf vorgesehen ist, um Druckmedium vom Äußeren in das Innere der Dichteinrichtung zu leiten, wodurch im Betrieb durch die Einführung des Druckmediums der Kolben (6) vom Boden der Ausnehmung (5) und die Mutter (4) oder der Bolzenkopf von der Anordnung (2) wegbewegt wird, um den Bolzen (1) oder den Schraubbolzen zu spannen, dadurch gekennzeichnet, daß die Dichteinrichtung als Metallkapsel (18, 30) ausgebildet ist, in welche im Betrieb Hydraulikflüssigkeit eingeleitet wird, um eine Dichtung zwischen dem Kolben (6) und der ringförmigen Ausnehmung (5) zu bilden, und daß weitere Hydraulikflüssigkeit in dem Boden der Ausnehmung (5) einleitbar ist und auf die Metallkapsel (18, 30) einwirkt und eine Last erzeugt, die den Kolben (6) bewegt.

2. Vorrichtung nach Anspruch 1, dadurch gekennzeichnet, daß die Metallkapsel (18, 30) ein Metallreifenkörper (18, 30) ist, in welchen durch einen Kanal (23, 31) Hydraulikflüssigkeit einleitbar ist.

3. Vorrichtung nach Anspruch 2, dadurch gekennzeichnet, daß die weitere Hydraulikflüssigkeit in den Boden der Ausnehmung (5) durch einen zweiten Kanal (21) durch die Mutter (4) oder den Bolzenkopf einleitbar ist.

4. Vorrichtung nach Anspruch 3, dadurch gekennzeichnet, daß der Druck der weiteren Hydraulikflüssigkeit, die in den Boden der Ausnehmung eingeleitet wird, höher ist als der Druck der Hydraulikflüssigkeit in dem Metallreifen.

5. Vorrichtung nach Anspruch 2, dadurch ge-

7 **0 129 440** 8

kennzeichnet, daß die Metallkapsel ein Metallreifen ist, welcher gefaltete Wandungen aufweist, die mit der Wandung der Ausnehmung (5) an mehreren Punkten in Eingriff gelangen.

6. Vorrichtung nach Anspruch 2, dadurch gekennzeichnet, daß der Metallreifen (30) in Form eines U-Rings ausgebildet ist, welcher in der Ausnehmung (5) derart angeordnet ist, daß die offene Seite auf den Boden der Ausnehmung (5) und den Kanal (31) zuweist.

7. Vorrichtung nach einem der vorstehenden Ansprüche, dadurch gekennzeichnet, daß die Metallkapsel (18, 30) aus gesponnenem Metall besteht.

8. Vorrichtung nach einem der vorstehenden Ansprüche, dadurch gekennzeichnet, daß Beilagen, bestehend aus halbringförmigen Distanzstücken vorgesehen sind, um die Spannung in dem Bolzen zu halten, nachdem der Hydraulikdruck aus der Ausnehmung (5) entlastet ist.

9. Vorrichtung nach einem der vorstehenden Ansprüche 1 bis 7, dadurch gekennzeichnet, daß eine Sperr-Ring (34) außen auf die Mutter (4) oder den Bolzenkopf oder den Kolben gewindemäßig aufgeschraubt ist.

10. Vorrichtung nach einem der vorstehenden Ansprüche, dadurch gekennzeichnet, daß die Metallkapsel aus einer rostfreien Stahllegierung, aus INCONEL 625 oder INCONEL 718 besteht.

**Revendications**

1. Dispositif pour le serrage d'un boulon (1), ou d'une cheville, placé à l'intérieur d'un ensemble (2) devant être fixé, comprenant un écrou (4) destiné à être vissé sur le boulon ou la cheville, ou sur la tête du boulon, présentant sur son côté inférieur un évidement annulaire (5) à parois latérales parallèles s'étendant axialement, un piston annulaire (6) qui est un coulisseau ajusté à l'intérieur de l'évidement annulaire (5), un moyen d'étanchéité placé à l'intérieur dudit évidement annulaire entre le fond de celui-ci et le piston (6), un passage (9) à travers l'écrou (4) ou la tête du boulon prévu pour l'admission d'un liquide sous pression venant de l'extérieur et se dirigeant vers l'intérieur dudit moyen d'étanchéité tandis que, en service, la pénétration du liquide sous pression déplace le piston (6) en l'écartant du fond de l'évidement (5) et déplace l'ècrou (4) ou la tête du boulon en l'écartant de l'ensemble (2) afin de mettre le boulon (1) ou la cheville sous tension, caractérisé par le fait que ledit moyen d'étanchéité est une capsule métallique (18, 30) à l'intérieur de laquelle en service, un fluide hydraulique est admis afin de former un joint entre le piston (6) et l'évidement annulaire (5), une autre quantité de fluide hydraulique pénétrant vers l'intérieur du fond de l'évidement (5) afin d'agir sur la capsule métallique (18, 30) pour développer une charge destinée à déplacer le piston (6).

2. Dispositif selon la revendication 1, caractérisé par le fait que la capsule métallique (81, 30) est un tube métallique de forme annulaire (18, 30) à l'intérieur duquel pénètre un fluide hydraulique à travers un passage (23, 31).

3. Dispositif selon la revendication 2, caractérisé par le fait que la dite autre quantité de fluide hydraulique pénètre vers le fond de l'évidement (5) à travers un deuxième passage (21) traversant l'écrou (4) ou la tête du boulon.

4. Dispositif selon la revendication 3, caractérisé par le fait que la pression dudit autre fluide hydraulique pénétrant vers le fond de l'évidement présente une pression supérieure à la pression hydraulique existant à l'intérieur du tube métallique de forme annulaire.

5. Dispositif selon la revendication 2, caractérisé par le fait que la capsule métallique est une tube annulaire métallique dont les parois présentent des circonvolutions qui s'engagent dans la paroi de l'évidement (5) en plusieurs points.

6. Dispositif selon la revendication 2, caractérisé par le fait que le tube annulaire métallique (30) présente une section en "U" qui est placé dans l'évidement (5), son côté ouvert faisant face d'une part au fond de l'évidement (5) et d'autre part au passage 31.

7. Dispositif selon l'une quelconque des revendications précédentes, caractérisé par le fait que la capsule métallique (18, 30) est obtenue par le procédé de repoussage des métaux.

8. Dispositif conforme à l'une quelconque des revendications précédentes, caractérisé par le fait que des cales comprenant des pièces d'écartement semi-annulaires sont utilisées dans le but de maintenir la tension à l'intérieur du boulon après que la pression hydraulique régnant à l'intérieur de.l'évidement (5) aura été détendue.

9. Dispositif selon l'une des revendications 1 à 7, caractérisé par le fait qu'une bague de blocage (34) est vissée sur l'extérieur de l'écrou (4) ou sur l'extérieur de la tête du boulon ou sur le piston.

10. Dispositif selon l'une des revendications précédentes, caractérisé par le fait que la capsule métallique est en un alliage d'acier inoxydable, alliage INCONEL 625 ou alliage INCONEL 718.

Fig. 1.

Fig. 2.